# EUROPEAN PATENT APPLICATION

(11) **EP 2 526 892 A1**
(43) Date of publication of application: **28.11.2012**
(21) Application number: 11167461.0
(22) Date of filing: 25.05.2011
(51) Int. Cl.: A61C 8/00

(54) **Gum shaping device**

(71) Applicant: TRI Dental Implants AG, 6430 Baar (CH)
(72) Inventor: Szakacs, Zoltán, 9400, Sopron (HU); Steigmann, Marius, 68163, Mannheim (DE)
(74) Representative: Kacsuk, Zsófia

(57) **Abstract**

The invention relates to gum shaping device having a proximal cylindrical gum shaping portion and a distal engagement portion for engagement with a threaded internal passage of a dental implant. The gum shaping device is characterised in that the proximal gum shaping portion comprises retaining means for holding the gum tissue in a desired vertical position.
The invention further relates to a method for the aesthetic vertical repositioning of gum tissue in the proximity of a dental implant, characterised by comprising the steps:
a) inserting a gum shaping device comprising retaining means for holding the gum tissue in a given vertical position into a dental implant implanted at an implantation site,
b) attaching the gum tissue to the retaining means of the gum shaping device.

## Description

The present invention relates to a gum shaping device having a proximal cylindrical gum shaping portion and a distal engagement portion for engagement with a threaded internal passage of a dental implant.

A dental implant is an artificial tooth root which is surgically implanted in the place of a lost or extracted tooth. If the tooth is lost or extracted in the smile zone it is important to preserve the rounded gum contour from an aesthetic point of view. The rounded gum contour can disappear due to the withdrawal of the gum covering the tooth in absence of the tooth. In order to prohibit the withdrawal of the gum it is generally recommended to insert a gum-shaping screw into the implant, which fills out the hole in the gum tissue left behind the removed tooth. The use of a gum shaping screw may take place after the implant is revealed if the gum is stitched up after implantation and the implant is left to heal covered under the gum, or it may take place straight after implantation if the implant is left to heal uncovered (generally in the case of immediate implantation).

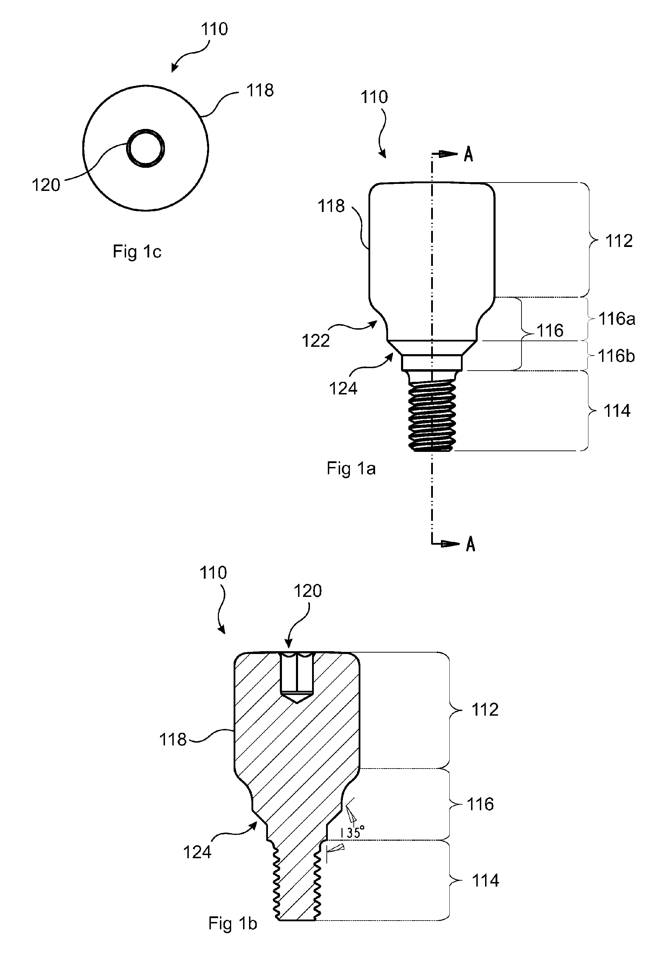

Figs. 1a-1c illustrate a common prior art gum-shaping screw 110 comprising a proximal gum shaping portion 112, an externally threaded distal portion 114 and a neck portion 116 connecting the two. The proximal gum shaping portion 112 has an external cylindrical face 118 of a diameter of about 5 - 6 mm. It further comprises a proximal anti-rotational engagement portion generally provided in the form of a hex-shaped recess 120 designed to co-operate with a hex-shaped wrench when screwing the gum-shaping screw 110 into a dental implant.

The distal threaded portion 114 has a smaller diameter than the proximal portion 112, and this diameter as well as the L length of the threaded portion depends on the dimensions of the internal threaded bore of the implant into which the threaded portion 114 needs to be inserted.

The neck portion 116 connecting the threaded portion 114 with the gum shaping portion 112 is typically partly received in the internal passage of the implant (distal neck portion 116b), while a proximal neck portion 116a extends from the implant and into the gum tissue. The proximal neck portion 116a is generally provided with a curvature 122 which is believed to help integration with the gum tissue. In the present example the curvature 122 is followed by a tapered portion 124, however the shape and dimension of the distal neck portion 116b is determined by the type of implant with which the gum shaping screw 110 needs to be compatible with.

The prior art gum shaping screws only partly solve the problem of preserving the gum tissue since stable vertical repositioning of the tissue is not ensured as no means are provided for fixing the gum in the required position. In the course of the dental surgery the gum tissue is necessarily cut through above the implantation site in order to extract the tooth and insert the dental implant and possibly in order to reveal the implant if it is left to heal under the sewed up gum. Because the cut gum tissue cannot be affixed to the current gum shaping screws, therefore it may withdraw in the vertical direction or shift from the desired position. Furthermore, in cases where the patient has already a decreased gum tissue volume (for example because the loss of the tooth occurred earlier) it is preferred to make the incision in the gum tissue in the proximity of the buccal cavity and fold the excess lobule in the proximal direction (in the direction of the buccal side of the gum) in order to provide more gum tissue on the buccal side of the tooth (implantation site) for aesthetic purposes. However, prior art gum shaping screws do not allow for securely fixing the excess lobule which may lead to the shifting of the lobule to an undesired or asymmetric position.

It is an object of the present invention to overcome the problems associated with the prior art. In particular, it is an object of the invention to allow for the vertical repositioning of gum tissue surrounding the lost or extracted tooth.

The invention is based on the recognition that the gum shaping device may be provided with retaining means for holding the gum tissue in the desired vertical (and horizontal) position.

The above objects are achieved by a gum shaping device having a proximal cylindrical gum shaping portion and a distal engagement portion for engagement with a threaded internal passage of a dental implant. The gum shaping device is characterised in that the proximal gum shaping portion comprises retaining means for holding the gum tissue in a desired vertical position.

In a preferred embodiment the proximal gum shaping portion comprises a proximal rim and the retaining means comprise at least two through holes which are provided in the proximal rim.

The invention further relates to a method for the aesthetic vertical repositioning of gum tissue in the proximity of a dental implant, characterised by comprising the steps:
a) inserting a gum shaping device comprising retaining means for holding the gum tissue in a given vertical position into a dental implant implanted at an implantation site,
b) attaching the gum tissue to the retaining means of the gum shaping device.

Further advantageous embodiments of the invention are defined in the attached dependent claims.

Further details of the invention will be apparent from the accompanying figures and exemplary embodiments.
Fig. 1a is a perspective side view of a prior art gum shaping device.
Fig. 1b is a sectional view of the gum shaping device according to Fig. 1 a taken along line A-A.
Fig. 1c is a top plan view of the gum shaping device according to Fig. 1 a.
Fig. 2a is a perspective side view of an advantageous embodiment of a gum shaping device according to the invention.
Fig. 2b is a sectional view of the gum shaping device according to Fig. 2a taken along line A-A.
Fig. 2c is a top plan view of the implant according to Fig. 2a.
Fig. 3 is a partial sectional view of another embodiment of the gum shaping device according to the invention.
Fig. 4a is a partial sectional view of another embodiment of the gum shaping device according to the invention.
Fig. 4b is a cross sectional view of an inner passage of a through hole according to Fig. 4a taken along line B-B.
Fig. 5a is a partial sectional view of another embodiment of the gum shaping device according to the invention.
Fig. 5b is a top plan view of the gum shaping device according to Fig. 5a.
Fig. 6 is a schematic sectional view of another embodiment of the gum shaping device according to the invention.
Fig. 7a - 7b schematically illustrates the steps of a preferred embodiment of the method according to the invention.

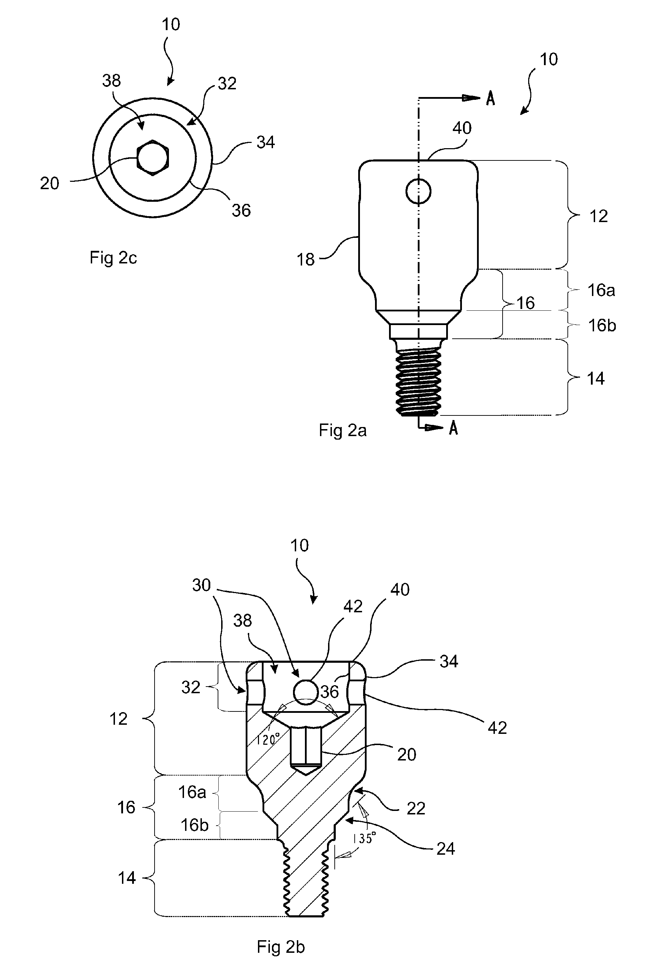

Fig. 2a shows a preferred embodiment of a gum shaping device 10 in accordance with the present invention. The gum shaping device 10 comprises a proximal gum shaping portion 12, a distal engagement portion 14 in the form of an externally threaded shaft, and a neck portion 16 connecting the proximal portion 12 and the distal portion 14. The proximal gum shaping portion 12 has a cylindrical external face 18 of a diameter of about 3 - 6 mm. Retaining means 30 are provided on the proximal gum shaping portion 12 in accordance with the invention for holding the gum tissue of a patient in a desired vertical position in the proximity of an implantation site where a dental implant is inserted. In a preferred embodiment the proximal gum shaping portion 12 comprises a proximal rim 32 having an external face 34 and an internal face 36 bordering an inner cavity 38 which is preferably open from the proximal end 40 of the proximal gum shaping portion 12 in order to facilitate attaching the gum tissue to the retaining means 30 as will be explained later on. The external face 34 preferably forms a continuous surface with the rest of the cylindrical face 18 of the proximal gum shaping portion 12. In the embodiment illustrated in Figs. 2a - 2b the retaining means 30 are formed as through holes 42 connecting the external face 34 and the internal face 36 of the proximal rim 32. The through holes 42 are preferably formed as lateral bores in order to facilitate manufacture of the gum shaping device 10. The present embodiment comprises four such lateral through holes 42, however, e.g. depending on the diameter, more or less through holes 42 may be provided. For example a proximal gum shaping portion 12 having an outer diameter of about 3 - 5 mm may comprise four such through holes 42, while a gum shaping portion 12 with a greater diameter of 5 - 7 mm may comprise six such through holes 42 equally spaced around the circumference of the proximal rim 32. However, preferably at least two through holes are provided for affixing the gum tissue to the gum shaping device 10 using a needle and thread in a simple and effective way: the thread is retained in the gum shaping device 10 by passing the thread through one of the through holes 42 into the proximal cavity 38 and returning the thread to the external face 34 of the proximal rim 32 through another through hole 42.

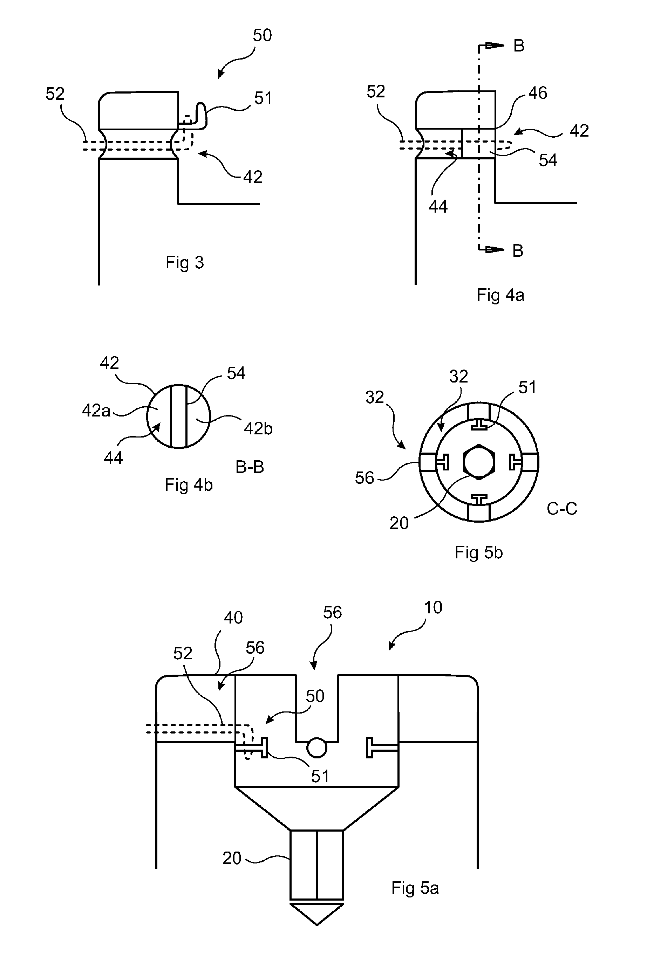

Alternatively, a thread retainer 50 may be provided on the inner face 34 of the proximal rim 32 or on the face of the proximal end 40 of the gum shaping portion 12, for example in the form of a loop or a hook 51, for retaining a thread 52 illustrated with dashed line in Fig. 3.

Alternatively, the through hole 42 may be provided with a separator element 54 dividing the inner passage 44 of the through hole 42 into two parts as illustrated in Fig. 4b. Such a separator element 54 may be provided along the whole of the inner passage 44 of the through hole 42 whereby double holes 42 are created, or it may be provided at only one end of the inner passage 44, preferably at the inner end 46 thereof whereby only the inner end 46 of the through hole 42 is divided into two halves allowing the thread 52 to be passed through one half 42a and returned through the other half 42b as illustrated in Fig. 4a.

It is clear that various other suitable embodiments of the retaining meanings 30 other than through holes 42 can be readily envisaged by the skilled person. For example the proximal rim 32 may comprise proximal slots 56 on the proximal end 40 of the gum shaping portion 12 and thread retainers 50 may be provided in the form of loops or hook elements 51 as illustrated in Fig. 5a and 5b.

As can be seen in Fig. 2b the proximal gum shaping portion 12 further comprises an anti-rotational engagement portion 20 extending from the distal end 38b of the proximal cavity 38 into the proximal gum shaping portion 12. The anti-rotational engagement portion 20 may be provided in the form of a hex-shaped recess as illustrated in Fig. 2b which is designed to co-operate with a hex-shaped wrench in order to facilitate screwing the gum-shaping screw 10 into a dental implant.

The distal engagement portion 14 has a smaller diameter than the proximal portion 12, and this diameter as well as the L length of the distal portion 14 depends on the dimensions of an inner passage of a dental implant into which the distal portion 14 needs to be inserted for engagement. According to a particularly advantageous embodiment the engagement is a threaded engagement in order to co-operate an internally threaded passage (bore) of a dental implant, in which case the distal engagement portion 14 of the gum shaping device 10 is preferably formed as an externally threaded shaft as illustrated in Figs. 2a and 2b. Externally threaded is understood to include embodiments which are only partly threaded depending on the threads of the internal bore of the implant with which the gum-shaping screw 10 is to be coupled with.

Other possible engagements may include abrasion fitting, bayonet lock, clamp joint, etc. provided between the internal passage of a dental implant and the distal engagement portion 14 of the gum shaping device 10.

The gum shaping device 10 may be formed as a single element or as multiple-component device. In the former case the proximal gum shaping portion 12 and the distal engagement portion 14 are connected by the neck portion 16 which also forms an integral part of the gum shaping device 10. The neck portion 16 may comprise a distal neck portion 16b which is typically received in the internal passage of the implant, and a proximal neck portion 16a which typically extends from the implant into the gum tissue when the gum shaping device 10 is inserted into the implant. The proximal neck portion 16a is generally provided with a concave curvature 22 which is believed to help integration with the gum tissue. In the present embodiment the curvature 22 is followed by a tapered portion 24 of the distal neck portion 16b, however the shape and dimension of the distal neck portion 16b is determined by the type of implant with which the gum shaping device 11 needs to be compatible with.

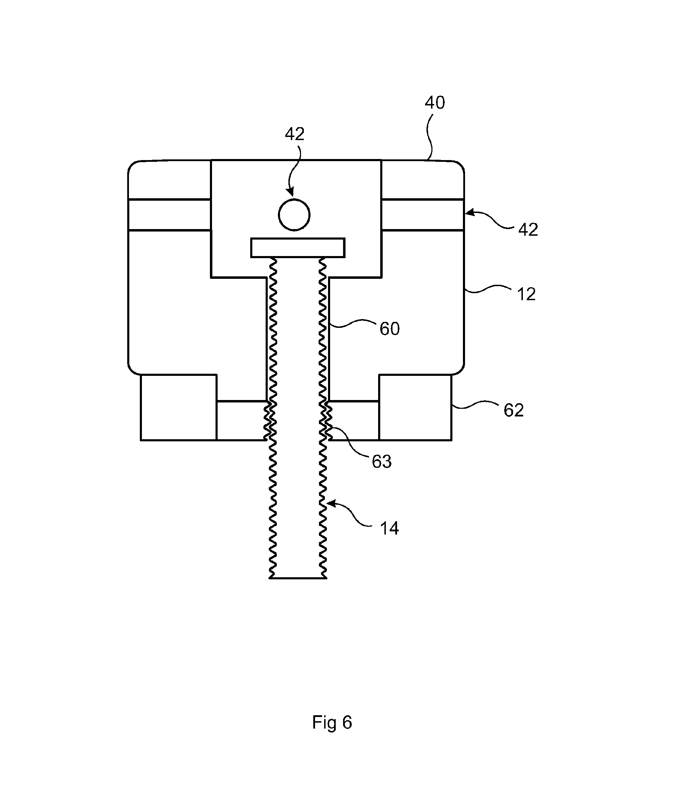

The gum shaping device 10 may comprise multiple components, for example the proximal gum shaping portion 12 and the distal engagement portion 14 may be two separate elements which can be assembled to form the gum shaping device 10 according to the invention. For example the distal engagement portion 14 can be in the form of a threaded shaft and the proximal gum shaping portion 12 may be provided with an axial through hole 60 for passing the threaded shaft 14 there through as illustrated in Fig. 6. In this case a retaining component 62 comprising a female screw may be provided to secure the threaded shaft 14 to the proximal gum shaping portion 12. Alternatively, the axial through hole 60 of the proximal gum shaping portion 12 may be at least partly threaded and the distal engagement portion 14 may be in the form of a threaded shaft which can be screwed into the axial through hole 60 such as to extend distally from the proximal gum shaping portion 12.

The gum shaping device 10 according to the invention is applied as follows.

inserting a dental implant may be carried out in any suitable way. Generally implantation involves preparing the implantation site in the mandible, drilling a hole therein and inserting the implant after which the gum may be stitched up in which case the implant heals covered under the gum, or the implant is left to heal uncovered.

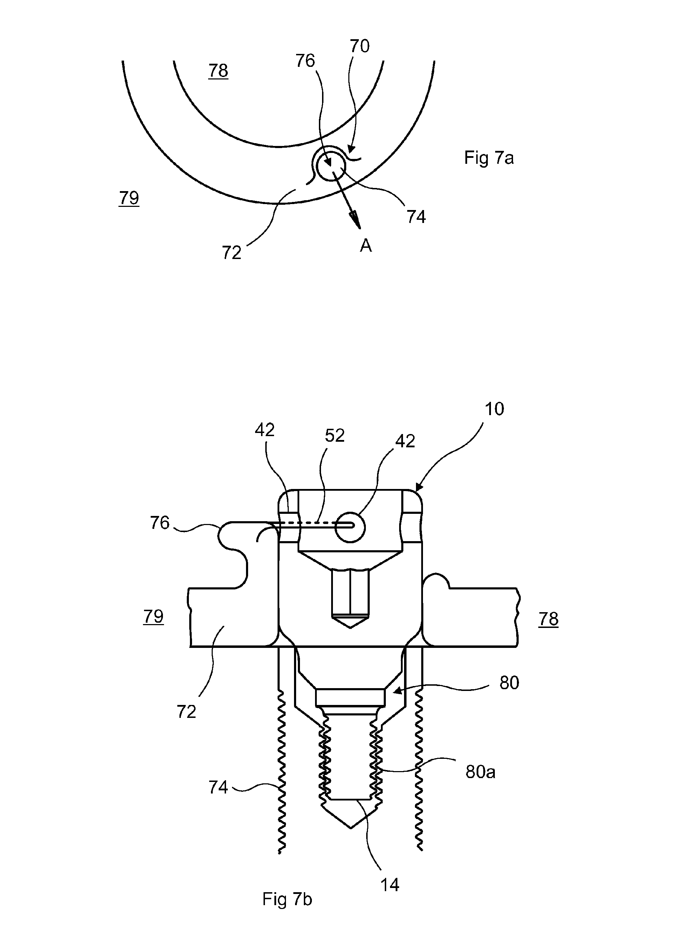

In case the implant heals covered under the gum then the implant is first revealed by making an incision 70 in the gum tissue 72 in the proximity of the implant 74 (including the case where the incision 70 runs at least partly above the implant 74) whereby preferably at least a proximal lobule 76 is produced as illustrated in Fig. 7a. According to a particularly advantageous way of carrying out the inventive method, the incision 70 is made in the gum tissue 72 in the proximity of the buccal cavity 78, preferably around the distal circumference of the implant 74. The resulting proximal lobule 76 is folded in the proximal direction (illustrated by arrow A) over the implant 74 in order to provide more gum tissue 72 on the buccal side 79 (proximal side) of the implant 74, which is the visible side of the denture. In the next step illustrated in Fig. 7b the gum shaping device 10 is coupled with the implant 74 by inserting the distal engagement portion 14 of the gum shaping device 10 into an inner passage 80 of the implant 74. The inner passage 80 typically comprises a threaded bore 80a, in which case the applied gum shaping device 10 is provided with an at least partly threaded shaft as the distal engagement portion 14. However, the distal engagement portion 14 of the gum shaping device 10 and the inner passage 80 of the implant 74 may be provided with any kind of matching mating elements.

Fig. 7b illustrates how the gum tissue 72 is then attached to the retaining means 30 of the gum shaping device 10 preferably at least on the buccal side 79 of the implant 74 (opposite the buccal cavity 78), in order to prohibit withdrawal of the gum tissue 72 during the time period in which the dental prosthesis cannot be applied onto the implant 74 yet and in order to provide for a higher gum tissue 72 where the withdrawal of the gum tissue 72 has already started to take place (for example because the tooth was lost earlier).

In the embodiment depicted in Fig. 7b the retaining means 30 is a proximal rim 30 provided with through holes 42. Attaching the gum tissue 72 can be advantageously carried out by sewing the gum tissue 72 to the proximal rim 30 which involves passing a thread 52 via a sewing needle through one of the through holes 42 into the inner cavity 38 of the gum shaping device 10 and back again, either by having circumvented a thread retainer 50 such as a hook 51 or separator element 54 as explained previously, or by returning the needle through a neighbouring through hole 42. As a result the excess gum tissue 72, preferably in the form of a proximal lobule 76, is retained in a given vertical position whereby the aesthetic appearance of the gum is maintained or ameliorated.

If the implant 74 is left to heal uncovered (typically in case of immediate implantation technology) the gum shaping device 10 can be coupled with the dental implant straight away and the access gum tissue 72 around the implantation site, but preferably at least on the buccal side 79 of the implant 74, is attached to the retaining means 30 of the gum shaping device 10 as explained before.

The above-described embodiments are intended only as illustrating examples and are not to be considered as limiting the invention. Various modifications will be apparent to a person skilled in the art without departing from the scope of protection determined by the attached claims.

## Claims

1. Gum shaping device having a proximal cylindrical gum shaping portion (12) and a distal engagement portion (14) for engagement with an internal passage (80) of a dental implant (74), **characterised in that** the proximal gum shaping portion (12) comprises retaining means (30) for holding the gum tissue (72) in a desired position.

2. Gum shaping device according to claim 1, wherein the proximal gum shaping portion (12) comprises a proximal rim (32) and the retaining means (30) comprises at least one through hole (42) which is provided in the proximal rim (32).

3. Gum shaping device according to claim 2, wherein the proximal rim (32) has an external face (34) and an internal face (36) bordering an inner proximal cavity (38) and the at least one through hole (42) is a substantially lateral hole connecting the external face (34) and the internal face (36) of the proximal rim (32).

4. Gum shaping device according to claim 3, wherein an anti-rotational engagement portion (20) extends from the proximal cavity (38) into the proximal gum shaping portion (12).

5. Gum shaping device according to any of claims 1 to 4, wherein the proximal gum shaping portion (12) and the distal engagement portion (14) are connected by a neck portion (16).

6. Gum shaping device according to any of claims 1 to 4, wherein the proximal gum shaping portion (12) is provided with an axial through hole (60) and the distal engagement portion (14) can be inserted into the axial through hole (60) such as to extend distally from the proximal gum shaping portion (12).

7. Gum shaping device according to any of claims 2 to 6, wherein at least two through holes (42) are provided in the proximal rim (32) which are equally spaced around the circumference of the rim (32).

8. Gum shaping device according to any of claims 2 to 6, wherein four to six through holes (42) are provided on the proximal rim (32) which are equally spaced around the circumference of the rim (32).

9. Gum shaping device according to any of claims 1 to 8, wherein the distal engagement portion (14) comprises a threaded shaft for engagement with a threaded internal passage (80a) of a dental implant (74).

10. Method for the aesthetic vertical repositioning of gum tissue (72) in the proximity of a dental implant (74), **characterised by** comprising the steps of:
a) inserting a gum shaping device (10) comprising retaining means (30) for holding the gum tissue (72) in a given vertical position into a dental implant (74) which is inserted into the mandible,
b) attaching the gum tissue (72) to the retaining means (30) of the gum shaping device (10).

11. Method according to claim 10, further comprising the steps of:
● inserting the dental implant (74) into the mandible,
● stitching up the gum tissue (72) and leaving the implant (74) to heal,
● revealing the implant (74) by making an incision in the gum tissue (72) whereby at least a proximal lobule (76) is produced,
● folding the proximal lobule (76) over the implant (74) in the direction of the buccal side (79) of the implant (74),
● inserting the gum shaping device (10) into the implant (74), and
● attaching at least the proximal lobule (76) to the retaining means (30) of the gum shaping device (10).

12. Method according to claim 11, wherein the incision is made in the gum tissue (72) in the proximity of the buccal cavity (78), and folding the proximal lobule (76) in the direction of the buccal side (79) over the implant (74) in order to provide more gum tissue (72) on the buccal side (79) of the implant (74).

13. Method according to claim 10, further comprising inserting a dental implant (74) into the mandible in the course of immediate implantation prior to step a).
